(19) Europäisches Patentamt
European Patent Office
Office européen des brevets

(11) Veröffentlichungsnummer: **0 297 037**
**A1**

(12) # EUROPÄISCHE PATENTANMELDUNG

(21) Anmeldenummer: **88810387.6**

(22) Anmeldetag: **10.06.88**

(51) Int. Cl.[4]: **C 08 G 75/02**
H 01 B 1/12

(30) Priorität: **17.06.87 CH 2276/87**

(43) Veröffentlichungstag der Anmeldung:
**28.12.88 Patentblatt 88/52**

(84) Benannte Vertragsstaaten:
**CH DE FR GB IT LI NL**

(71) Anmelder: **CIBA-GEIGY AG**
**Klybeckstrasse 141**
**CH-4002 Basel (CH)**

(72) Erfinder: **Hunziker, Max, Dr.**
**Chasseralstrasse 8**
**CH-3186 Düdingen (CH)**

(54) **Poly(arylensulfide).**

(57) Halogenfreie, in organischen Lösungsmitteln unlösliche und unschmelzbare Poly(arylensulfide), bestehend im wesentlichen aus Strukturelementen der Formel I

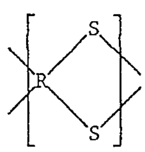

(I),

wobei diese mehr als fünfmal im Molekül enthalten sind und worin R einen der folgenden Reste bedeutet

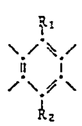 , 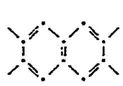 , 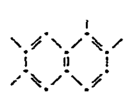 , 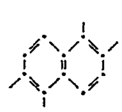 ,

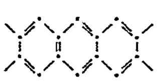 , 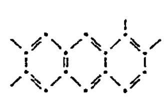 , 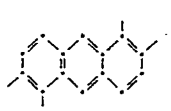 ,

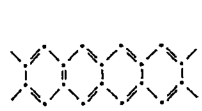 , 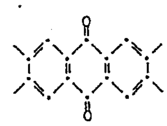 oder 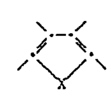 ,

worin $R_1$ und $R_2$ unabhängig voneinander je für -H, $C_1$-$C_{20}$-Alkyl, Aryl mit bis zu 12 C-Atomen, Aralkyl mit bis zu 20 C-Atomen, Alkaryl mit bis zu 20 C-Atomen, -CN, $-OCOR_3$, -OH oder $-SR_4$ stehen, worin $R_3$ und $R_4$ unabhängig voneinander je ein $C_1$-$C_{20}$-Alkyl oder Aryl mit bis zu 12 C-Atomen bedeuten, X für NH, $NR_5$, S oder O steht, worin $R_5$ ein $C_1$-$C_{20}$-Alkyl oder ein Aryl mit bis zu 12 C-Atomen bedeutet, können nach der Dotierung mit Oxidationsmitteln, wie beispielsweise Jod, Brom, $SbF_5$, $AsF_5$, $PF_5$ oder $SbCl_5$, als elektrisch leitende Polymere eingesetzt werden.

EP 0 297 037 A1

## Poly(arylensulfide)

Die vorliegende Erfindung betrifft halogenfreie, in organischen Lösungsmitteln unlösliche und unschmelzbare Poly(arylensulfide), Verfahren zu ihrer Herstellung und deren Verwendung als elektrisch leitende Polymere.

Die bisher bekannt gewordenen Verfahren zur Herstellung von Poly(arylensulfiden) ergeben keine halogenfreien oder keine einheitlichen Polymere, so dass diese zur Herstellung elektrisch leitender Polymere weniger gut geeignet sind.

Beispielsweise werden bei im US Patent 3,354,129 offenbarten Verfahren in einem polaren organischen Lösungsmittel halogensubstituierte aromatische Verbindungen mit Alkalisulfiden bei erhöhter Temperatur umgesetzt.

In Nippon Kagahu Kaishi, 3, 1986, Seiten 319 ff, wird angegeben, dass man durch Erhitzen von 1,2,4,5-Tetrachlorbenzol mit wasserfreiem $Na_2CO_3$ und Schwefel ein Poly(arylensulfid) erhält, das ausser mit Chlor auch mit Schwefel verunreinigt ist.

Im Journal of Polymer Science, Part A, Vol. 24, Seite 3153 ff, wird die Synthese von Poly(arylensulfiden) durch Behandeln von Diphenylsulfid, Diphenyldisulfid, Thianthren, Thiophenol oder eines Benzol-Schwefel-Gemisches mit $AlCl_3$ bei hohen Temperaturen beschrieben. Dabei werden Gemische von oligomeren Arylensulfiden erhalten, die beim Erhitzen erweichen und in Benzol teilweise löslich sind.

Es wurde nun gefunden, dass man durch thermische Selbstkondensation von bestimmten Tetramercaptoverbindungen im Temperaturbereich zwischen 200 und 400°C sehr reine, in organischen Lösungsmitteln unlösliche und beim Erhitzen unschmelzbare Poly(arylensulfide) erhält, die aufgrund ihrer Reinheit nach dem Dotieren mit üblichen Oxidationsmitteln, wie beispielsweise Brom, Metall- oder Metalloidpentahalogeniden, bessere Eigenschaften als elektrisch leitende Polymere aufweisen.

Gegenstand vorliegender Erfindung sind somit halogenfreie, in organischen Lösungsmitteln unlösliche und unschmelzbare Poly(arylensulfide), bestehend im wesentlichen aus Strukturelementen der Formel I

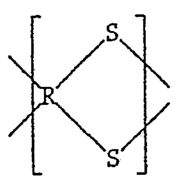 (I),

wobei diese mehr als fünfmal im Molekül enthalten sind und worin R einen der folgenden Reste bedeutet

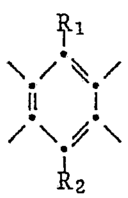 , 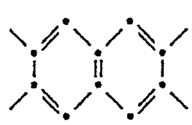 , 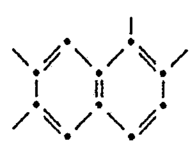 , 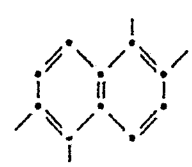 ,

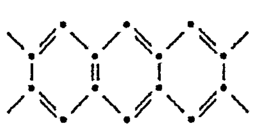 , 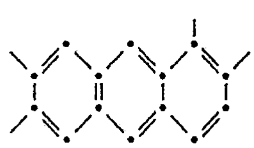 , 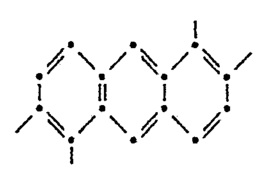 ,

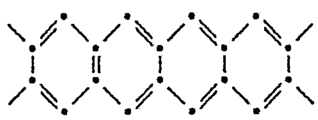 , 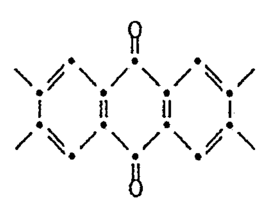 oder 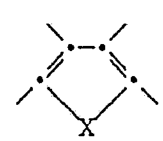 ,

worin $R_1$ und $R_2$ unabhängig voneinander je für -H, $C_1$-$C_{20}$-Alkyl, Aryl mit bis zu 12 C-Atomen, Aralkyl mit bis

zu 20 C-Atomen, Alkaryl mit bis zu 20 C-Atomen, -CN, $-OCOR_3$, -OH oder $-SR_4$ stehen, worin $R_3$ und $R_4$ unabhängig voneinander je ein $C_1$-$C_{20}$-Alkyl oder Aryl mit bis zu 12 C-Atomen bedeuten, X für NH, $NR_5$, S oder O steht, worin $R_5$ ein $C_1$-$C_{20}$-Alkyl oder ein Aryl mit bis zu 12 C-Atomen bedeutet.
Vorzugsweise enthalten die erfindungsgemässen Poly(arylensulfide) mehr als zehnmal das Strukturlement der Formel I.

Bei den erfindungsgemässen Poly(arylensulfiden) kann es sich um lineare oder um teilweise verzweigte Polymere handeln.

Vorzugsweise bedeutet R in der Formel I einen Rest der Formel

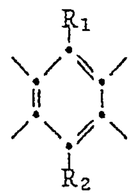
,

worin $R_1$ und $R_2$ unabhängig voneinander für ein Wasserstoffatom, ein $C_1$-$C_4$-Alkyl oder einen Rest $-OCOR_3$ stehen, worin $R_3$ ein $C_1$-$C_{20}$-Alkyl, vorzugsweise ein $C_1$-$C_4$-Alkyl, bedeutet.

Insbesondere bedeuten die Substituenten $R_1$ und $R_2$unabhängig voneinander je ein Wasserstoffatom, Methyl oder Isopropyl.
Bedeutet R in der Formel I einen der oben angegebenen Reste mit einem kondensierten Ringsystem, so können diese Reste gegebenenfalls ebenfalls mit einem oder mehreren Substituenten $R_1$ bzw. $R_2$ substituiert sein, die bis auf ein Wasserstoffatom die zuvor genannte Bedeutung haben. Bedeuten $R_1$, $R_2$, $R_3$, $R_4$ und $R_5$ je ein Alkyl, so kann dieses geradkettig oder verzweigt sein. Geeignete Alkyle sind beispielsweise Methyl, Ethyl, Isopropyl, n-Butyl, Isopentyl, n-Heptyl, 2-Ethylhexyl, n-Decyl oder n-Dodecyl.
Wenn $R_1$, $R_2$, $R_3$, $R_4$ oder $R_5$ je für ein Aryl stehen, so kann es sich beispielsweise um Phenyl, Naphthyl oder Biphenyl handeln.

Bedeuten $R_1$ und $R_2$ je ein Aralkyl, so kann dieser Rest beispielsweise Benzyl, Phenylethyl oder Phenylpropyl sein.
Stellen $R_1$ und $R_2$ je ein Alkaryl dar, so ist dieser Rest beispielsweise ein Tolyl, Xylyl, Ethylphenyl, Propylphenyl, Cumyl, tert.-Butylphenyl, n-Butylphenyl, n-Hexylphenyl oder n-Dodecylphenyl.

Die erfindungsgemässen, halogenfreien Poly(arylensulfide) der Formel I können durch thermische Selbstkondensation unter Elimination von $H_2S$ hergestellt werden, indem man Tetramercaptoverbindungen der Formel II

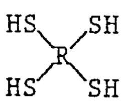
(II),

worin R die gleiche Bedeutung wie in Formel I hat, unter Inertgas oder im Vakuum bei Temperaturen zwischen 200 bis 400°C trocken erhitzt oder in einem inerten Lösungsmittel unter Schutzgas auf Temperaturen zwischen 200 und 400°C erhitzt.

Vorzugsweise führt man das erfindungsgemässe Verfahren zur Herstellung von Verbindungen der Formel I so durch, dass man Tetramercaptoverbindungen der Formel II im Vakuum auf Temperaturen zwischen 300 und 350°C erhitzt.

Die Verbindungen der Formel II sind zum Teil bekannt. Beispielsweise wird das 1,2,4,5-Tetramercaptobenzol in Phosphorus und Sulfur, 13, Seite 309 (1982), und das 3,6-Diisopropyl-1,2,4,5-tetramercaptobenzol in Chimia, 40, Seite 200 (1986), beschrieben. Die übrigen Verbindungen der Formel II sind in der Literatur noch nicht beschrieben worden. Soweit von der Formel II neue Verbindungen umfasst werden, die für die Herstellung der erfindungsgemässen Verbindungen der Formel I entwickelt wurden, stellen auch diese einen Gegenstand der Erfindung dar.
Die Verbindungen der Formel II können hergestellt werden, indem man Tetraalkylthioverbindungen der Formel III

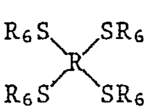
(III),

worin R die gleiche Bedeutung wie in Formel I hat und $R_6$ je ein $C_1$-$C_6$-Alkyl, vorzugsweise Methyl oder Ethyl,

bedeutet, durch Alkalimetalle in niedrigsiedenden primären Aminen zu Verbindungen der Formel II dealkyliert. Ein solches Verfahren ist beispielsweise in J. Amer. Chem. Soc. 82, 2872 (1960) oder in J. Amer. Soc. 84, 1621 (1962) beschrieben.

Die erfindungsgemässen Poly(arylensulfide) stellen in organischen Lösungsmitteln unlösliche Polymere dar. Desgleichen sind sie in konzentrierten Säuren, wie Schwefelsäure, Salpetersäure oder Dichloressigsäure, unlöslich. Die erfindungsgemässen Polymere weisen im allgemeinen eine hellgelbe Farbe auf und sind hart, spröde und unschmelzbar; ihre thermische Zersetzung beginnt oberhalb von 400°C.

Wie eingangs erwähnt, lassen sich die erfindungsgemässen Poly(arylensulfide) durch Behandeln mit Oxidationsmitteln, wie beispielsweise Brom, Metall- oder Metalloidpentahalogeniden, dotieren, wobei elektrisch leitfähige Polymere erhalten werden. Bei der Dotierung der erfindungsgemässen Poly(arylensulfide) nehmen diese eine dunkle Farbe an. Beispielsweise werden sie beim Dotieren mit starken Oxidationsmitteln, wie $AsF_5$ oder $SbF_5$, dunkelblau bzw. schwarz. Ein weiterer Erfindungsgegenstand sind somit Poly(arylensulfide), bestehend im wesentlichen aus Strukturelementen der Formel I, die durch Behandeln mit Brom, Metall-oder Metalloidpentahalogeniden oder anderen starken Oxidationsmitteln in dotierter Form vorliegen und deren Verwendung als leitende Polymere. Vorzugsweise verwendet man als Dotierungsmittel für die Poly(arylensulfide) der Formel I Brom. $SbF_5$, $SbCl_5$, $AsF_5$ oder $PF_5$, insbesondere $AsF_5$, wobei die bevorzugt verwendbaren elektrisch leitende Polymere erhalten werden.

Bei der Dotierung der Poly(arylensulfide) der Formel I verwendet man die Oxidationsmittel im allgemeinen in solchen Mengen, dass mindestens 10 Mol% der wiederkehrenden Struktureinheit

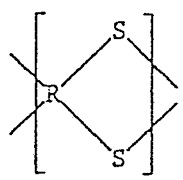

im Polymer in oxidierter Form vorliegen bzw. ein von Brom, einem Metall- oder Metalloidpentahalogenid abgeleitetes Anion enthalten. Poly(arylensulfide) aus Strukturelementen der Formel I, worin mindestens 20 Mol%, insbesondere mindestens 30 Mol% der wiederkehrenden Struktureinheit in oxidierter Form vorliegen, stellen bevorzugte, dotierte Poly(arylensulfide) dar.

Die erfindungsgemässen Poly(arylensulfide) können in dotierter Form in der Elektronik oder Mikroelektronik Anwendung finden, beispielsweise als elektrisch leitende Füller bei der antistatischen Ausrüstung oder der elektromagnetischen Abschirmung von elektronischen Bauteilen, als Elektrodenmaterialien für Batterien, zur Herstellung von Sensoren oder Halbleiterelementen.

Herstellung der Ausgangsstoffe

1. Herstellung von 1,2,4,5-Tetramercaptobenzol

In einem 3-Liter-Sulfierkolben werden unter Stickstoff-Inertisierung 1850 ml trockenes n-Propylamin und 9,6 g Lithiumgranulat vorgelegt. Man rührt bei Raumtemperatur, bis die blaue Farbe bestehen bleibt und gibt dann 55,0 g 1,2,4,5-Tetraethylthiobenzol fest zu. Es setzt eine leichte Exothermie ein, die man durch Kühlung mit einem Eisbad unter Kontrolle hält, so dass die Innentemperatur der Lösung 38°C nicht übersteigt. Nach Abklingen der Exothermie rührt man 16-20 h unter leichtem $N_2$-Strom weiter, fügt danach nochmals 400 mg Lithium zu und erhitzt für 1/2 h auf Rückflusstemperatur. Danach wird auf 10°C abgekühlt und portionenweise 18,5 g trockenes $NH_4Cl$ zugegeben. Man erhitzt auf Siedetemperatur des Propylamins und destilliert ca. 1500 ml ab. Die jetzt dickflüssige grünliche Suspension wird auf 5°C abgekühlt und durch Zutropfen von 5n HCl auf pH = 1 gestellt. Die Temperatur soll dabei 10°C nicht übersteigen. Das beim Ansäuren ausgefallene 1,2,4,5-Tetramercaptobenzol wird aus der Reaktionsmischung mit 1 mal 1 Liter und 2 mal je 500 ml Chloroform unter Inertgas extrahiert, getrocknet mit $Na_2SO_4$ und anschliessend auf die Hälfte eingedampft und auf -21°C tiefgekühlt. Das Tetramercaptobenzol fällt kristallin leicht grünlich aus. Ausbeute: 20,5 g (57,5 % der Theorie).
Schmelzpunkt (Smp.): 139-142°C.
IR-Spektrum: SH-Bande bei 2515 $cm^{-1}$, keine Ethyl-Bande mehr.
$^1$H-NMR-Spektrum ($CDCl_3$):
7,43 ppm S(2H)
3,71 ppm S(4H).

Zur weiteren Reinigung wird das Produkt bei 140°C am Hochvakuum sublimiert. Der Smp. steigt dabei auf 146,5-147,5°C. Elementaranalyse: berechnet: C = 34,92 %, H = 2,93 %, S = 62,15 %; gefunden: C = 34,82 %, H = 3,00 %, s = 62,27 %.

Beispiel 1: Herstellung von Poly(arylensulfid) aus 1,2,4,5-Tetramercaptobenzol

1 g 1,2,4,5-Tetramercaptobenzol wird unter Hochvakuum in eine Glasampulle von etwa 20-30 ml Inhalt eingeschmolzen. Die Ampule wird darauf vollständig in ein Metallbad von 300°C eingetaucht und dort 1 h belassen. Nach dem Entfernen aus dem Metallbad lässt man die Ampulle abkühlen und öffnet sie unter Beachtung geeigneter Schutzmassnahmen. In der Ampulle hat sich ein Ueberdruck von rund 10 bar aufgrund der $H_2S$-Abspaltung gebildet. Das zu einem gelben harten Klumpen zusammengebackene Polymer kann darauf isoliert werden.
Ausbeute: 645 mg, d.h., Gewichtsverlust 35,5 %. Berechneter Gewichtsverlust für Polymerisationsgrad $\infty$: 33,1 %. Elementaranalyse:
berechnet:
C 52,15 %, S 46,40 %;
gefunden:
C 49,82 %, S 47,36 %
IR-Spektrum: Die SH-Bande des 1,2,4,5-Tetramercaptobenzols bei 2515 $cm^{-1}$ ist im Polymer vollständig verschwunden.
DSC- Messung: Kein Glasübergang sichtbar; ab 400°C langsame exotherme Zersetzung.
Das Produkt ist in allen gebräuchlichen organischen Lösungsmitteln unlöslich, insbesondere auch in siedendem 1,2,4-Trichlorbenzol, siedendem Biphenyl oder Terphenyl und siedendem Tribenzylamin bei 380°C.

Beispiel 2:

Man geht vor wie in Beispiel 1, führt die Reaktion jedoch bei 300°C während 2 h durch.
Die analytischen Daten sind in Tabelle 1 angegeben.

Beispiele 3-7:

Man geht vor wie in Beispiel 1, verwendet jedoch anstelle der verschmolzenen Ampulle ein Bombenrohr mit Ueberdrucksicherung, die bei etwa 5 bar öffnet, und temperiert mittels eines Umluftofens anstelle des Metallbades. Die Reaktionsbedingungen, erzielten Gewichtsverluste und Analysen sind in Tabelle 1 angegeben.

Beispiele 8 und 9:

1 g 1,2,4,5-Tetramercaptobenzol wird unter Schutzgas (Argon) in der 20-fachen Menge eines hochsiedenden inerten Losungsmittels gelöst und mehrere Stunden unter leichtem Argonstrom auf Temperaturen zwischen 250 und 400°C erhitzt. Nach dem Abkühlen auf Raumtemperatur wird das Lösungsmittel im Soxhlet mit Toluol extrahiert. Man erhält ein hellgelbes Pulver wie in Beispiel 1. Im IR-Spektrum fehlt die SH-Bande und die übrigen Absorptionen stimmen mit dem IR-Spektrum des Produktes aus Beispiel 1 überein, sind jedoch schärfer, was als Hinweis auf ein einheitliches Produkt interpretiert werden kann.

Die Reaktionsbedingungen, erzielten Gewichtsverluste und analytischen Daten sind in Tabelle 1 angegeben.

Tabelle 1: Herstellung von Poly(arylensulfiden) aus 1,2,4,5-Tetramercaptobenzol

| Beispiel Nr. | Kondensationstemp. [°C] | Zeit [h] | Gewichtsverlust [%] | Elementaranalyse C gef. [%] | Elementaranalyse S gef. [%] |
|---|---|---|---|---|---|
| 1 | 300 b) | 1 | 35,7 | 49,82 | 47,36 |
| 2 | 300 b) | 2 | 36,5 | 48,75 | 47,93 |
| 3 | 270 a) | 6 | 29,6 | 48,00 | 47,53 |
| 4 | 350 a) | 1 | 33,7 | 50,13 | 48,30 |
| 5 | 350 a) | 1 | 31,6 | 50,07 | 46,32 |
| 6 | 350 a) | 2 | 33,6 | 50,36 | 47,59 |
| 7 | 350 a) | 2 | 30,6 | 50,01 | 46,58 |
| 8 | 300 b) c) | 6 | nicht bestimmt | 49,42 | 46,80 |
| 9 | 300 b) c) | 6 | 34,2 | 52,05 | 46,05 |

a) Luftbad (Umluftofen)

b) Metallbad

c) Lösungsmittel Terphenyl

Beispiel 10: Dotierung verschiedener Polymere aus Beispielen 1-9

30-50 mg einer genau eingewogenen Probe des Polymers wird in einer Wägeschale in einen rostfreien Vakuum- und drucksicheren Behälter gegeben. Dann wird der Behälter mehrmals evakuiert und mit trockenem reinstem Argon wieder geflutet um sämtliche Wasserspuren aus der Apparatur zu entfernen.
Am Schluss wird evakuiert auf mindestens $10^{-1}$ mbar und anschliessend über ein Nadelventil im Behälter ein Partialdruck von 650 mbar an $AsF_5$ eingestellt. Das Nadelventil wird darauf geschlossen und man beobachtet eine über etwa 6-10 h dauernde Abnahme des $AsF_5$-Partialdruckes, resultierend aus der Aufnahme von $AsF_5$ durch die Probe. Der Endwert beträgt 300 mbar. Hierauf wird die Apparatur wieder mit trockenem reinstem Argon geflutet und anschliessend bei einem dynamischen Vakuum von $5 \cdot 10^{-1}$ mbar überschüssiges $AsF_5$ während 24 h entfernt.
Die dotierte Probe wird darauf in einer Argonschutzatmosphäre aus dem Behälter isoliert und elektrisch vermessen.
Tabelle 2 enthält die spezifischen Leitfähigkeiten σ verschiedener Polymere gemäss Beispiel 1 bis 9, die mit einer Auswahl an Oxidationsmitteln behandelt wurden. Die spezifische Leitfähigkeit σ wurde in bekannter Weise an Pulverpresslingen bei Raumtemperatur gemessen.

| Polymer gemäss Beispiel Nr. | Oxidationsmittel | Spezifische Leitfähigkeit σ [$S \cdot cm^{-1}$] | Aequivalent Oxidationsmittel pro wiederkehrender Struktureinheit |
|---|---|---|---|
| 1 | $Br_2$ | $4{,}4 \cdot 10^{-3}$ | 2,21 $Br^-$ |
| 1 | $AsF_5$ | $1{,}4 \cdot 10^{-2}$ | 1,02 $AsF_6^-$ |
| 2 | $Br_2$ | $2{,}7 \cdot 10^{-5}$ | 0,24 $Br^-$ |
| 2 | $AsF_5$ | $5{,}2 \cdot 10^{-2}$ | 0,90 $AsF_6^-$ |
| 3 | $Br_2$ | $5{,}1 \cdot 10^{-4}$ | 1,05 $Br^-$ |
| 3 | $AsF_5$ | $7{,}9 \cdot 10^{-3}$ | 0,67 $AsF_6^-$ |
| 4 | $Br_2$ | $1{,}3 \cdot 10^{-3}$ | 0,74 $Br^-$ |
| 4 | $AsF_5$ | $6{,}8 \cdot 10^{-2}$ | 0,87 $AsF_6^-$ |
| 5 | $AsF_5$ | $6{,}7 \cdot 10^{-2}$ | 0,88 $AsF_6^-$ |
| 6 | $AsF_5$ | $6{,}9 \cdot 10^{-2}$ | 0,86 $AsF_6^-$ |
| 6 | $Br_2$ | $2{,}2 \cdot 10^{-4}$ | 0,37 $Br^-$ |
| 9 | $AsF_5$ | $1{,}1 \cdot 10^{-1}$ | 0,52 $AsF_6$ |
| 1 | $SbF_5$ | $4{,}6 \cdot 10^{-5}$ | 0,034 $SbF_6^-$ |
| 1 | $J_2$ | $< 10^{-9}$ | - |

Beispiel 11: Herstellung von Polyarylensulfid aus 2,3,5,6-Tetramercapto-p-xylol

a) Zur Herstellung von 2,3,5,6-Tetramercapto-p-xylol werden in einem 1-Liter-Sulfierkolben unter $N_2$-Inertisierung 600 ml trockenes n- Propylamin und 3,2 g Lithium-Pulver vorgelegt. Unter gutem Rühren erwärmt man auf 35°C, worauf sich nach etwa 1 h die Mischung blau färbt. Nun gibt man in kleinen Portionen im Stickstoffgegenstrom 20 g 2,3,5,6-Tetraäthylthio-p-xylol zu, wobei eine leichte Exothermie eintritt. Man kühlt auf Raumtemperatur und rührt danach 20 h unter leichtem $N_2$-Strom weiter. Danach wird 1 h am Rückfluss gekocht, erneut abgekühlt auf 10°C und die Reaktionslösung mit 5,9 g Ammoniumchlorid versetzt. Dann destilliert man das Propylamin bis auf etwa 100 ml ab, versetzt mit 100 ml entgastem Wasser und stellt mit 6N HCl auf pH 1. Dabei fällt ein beiges Produkt aus. Man dekantiert ab und wäscht 2mal mit etwa 100 ml 1N HCl nach, nimmt das Produkt in Ethanol/$CHCl_3$ (1:1) auf, trocknet mit $Na_2SO_4$ und dampft am Rotationsverdampfer zur Trockene ein. Die Rohausbeute beträgt 2,59 g (19 % der Theorie) mit Smp. von 190-210°C.
Das Rohprodukt wird 2mal aus Toluol unter Schutzgas (Argon) umkristallisiert. Smp. = 256-258°C; $^1$H-NMR-Spektrum ($CDCl_3$): 4,17 ppm S(4H), 2,60 ppm S(6H).
Elementaranalyse: berechnet:
C = 40,99 %, H = 4,30 %, S = 54,71 %;
gefunden:
C = 40,94 %, H = 4,35 %, S = 54,94 %,
IR-Spektrum: SH-Bande bei 2513 $cm^{-1}$.

$b_1$) 320 mg 2,3,5,6-Tetramercapto-p-xylol werden in ein Bombenrohr von etwa 10 ml Inhalt gegeben und mit einem federbelasteten Entlastungsventil verschlossen. Das Bombenrohr wird anschliessend im Muffelofen 2 h bei 250°C erhitzt. Nach dem Abkühlen erhält man das Polymer als gelblichen, harten

Klumpen.
Ausbeute: 228 mg, d.h. Gewichtsverlust 28,8 %. Berechneter Gewichtsverlust für Polymerisationsgrad ∞: 29,1 %.
IR-Spektrum: SH-Bande vollständig verschwunden.
Elementaranalyse: berechnet:
C = 57,80 %, H = 3,64 %, S = 38,57 %;
gefunden:
C = 56,50 %, H = 3,72 %, S = 38,08 %.
Das Polymer ist unlöslich und unschmelzbar.

$b_2$) 1 g 2,3,5,6-Tetramercapto-p-xylol wird zusammen mit 10 g Terphenyl in ein Bombenrohr von 20-30 ml Inhalt gegeben und mit einem Ueberdruckventil verschlossen. Man schmilzt die Mischung bei 260° C auf und durchmischt die Komponenten bis eine homogene Lösung entstanden ist. Dann erhitzt man 6 h auf 300° C, kühlt ab und extrahiert anschliessend das Terphenyl am Soxhlet mit Toluol aus dem Reaktionsgemisch. Man erhält 691 mg eines beigen Pulvers. Im IR-Spektrum des Produktes ist die SH-Bande noch sehr schwach erkennbar.
Elementaranalyse: berechnet für Polymerisationsgrad n = 11: C = 55,72 %, H = 3,72 %, S = 40,56 %; gefunden: C = 54,97 %, H = 3,77 %, S = 40,45 %. Bei Verwendung längerer Reaktionszeiten oder höherer Reaktionstemperatur erzielt man höhere Polymerisationsgrade.

c) Dotierung der Polymeren aus $b_1$) und $b_2$) nach der im Beispiel 10 beschriebenen Methode.

| Polymer | Oxidationsmittel | spez. Leitfähigkeit σ ($S \cdot cm^{-1}$) | Aquivalent Oxidationsmittel pro wiederkehrender Struktureinheit |
|---|---|---|---|
| $b_1$ | $AsF_5$ | $1,7 \cdot 10^{-3}$ | ~ 0,61 $AsF_6^{\ominus}$ |
| | $PF_5$ | $2,2 \cdot 10^{-8}$ | |
| $b_2$ | $AsF_5$ | $3 \cdot 10^{-4}$ | ~ 0,17 $AsF_6^{\ominus}$ |

## Patentansprüche

1. Halogenfreie, in organischen Lösungsmitteln unlösliche und unschmelzbare Poly(arylensulfide), bestehend im wesentlichen aus Strukturelmenten der Formel I

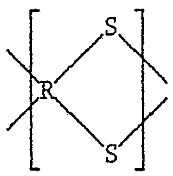

(I),

wobei diese mehr als fünfmal im Molekül enthalten sind und worin R einen der folgenden Reste bedeutet

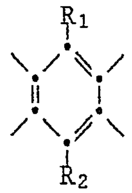 , 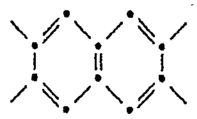 , 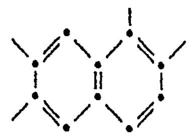 , 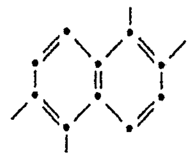 ,

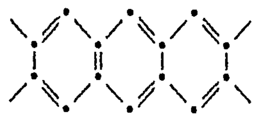 , 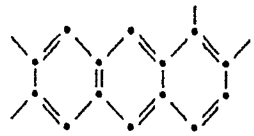 , 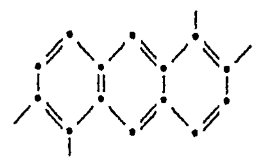 ,

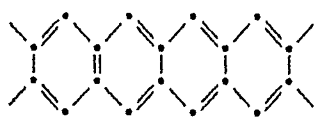 , 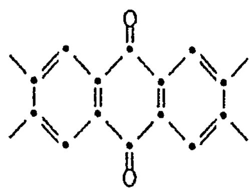 oder 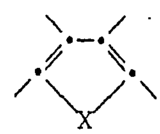 ,

worin $R_1$ und $R_2$ unabhängig voneinander je für -H, $C_1$-$C_{20}$-Alkyl, Aryl mit bis zu 12 C-Atomen, Aralkyl mit bis zu 20 C-Atomen, Alkaryl mit bis zu 20 C-Atomen, -CN, $-OCOR_3$, -OH oder $-SR_4$ stehen, worin $R_3$ und $R_4$ unabhängig voneinander je ein $C_1$-$C_{20}$-Alkyl oder Aryl mit bis zu 12 C-Atomen bedeuten, X für NH, $NR_5$, S oder O steht, worin $R_5$ ein $C_1$-$C_{20}$-Alkyl oder ein Aryl mit bis zu 12 C-Atomen bedeutet.

2. Poly(arylensulfide) gemäss Anspruch 1, worin R in Formel I einen Rest der Formel

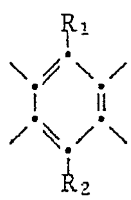

bedeutet, worin $R_1$ und $R_2$ unabhängig voneinander für ein Wasserstoffatom, ein $C_1$-$C_4$-Alkyl oder einen Rest $-OCOR_3$ stehen, wobei $R_3$ ein $C_1$-$C_{20}$-Alkyl bedeutet.

3. Poly(arylensulfide) gemäss Anspruch 1, worin R in Formel I einen Rest der Formel

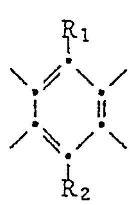

bedeutet, worin $R_1$ und $R_2$ unabhängig voneinander je für ein Wasserstoffatom, Methyl oder Isopropyl stehen.

4. Verfahren zur Herstellung von Poly(arylensulfiden) der Formel I gemäss Anspruch 1, dadurch gekennzeichnet, dass man Tetramercaptoverbindungen der Formel II

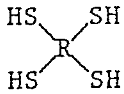

(II),

worin R die gleiche Bedeutung wie in Formel I hat, unter Inertgas oder im Vakuum bei Temperaturen zwischen 200 bis 400° C trocken erhitzt oder in einem inerten Lösungsmittel unter Schutzgas auf Temperaturen zwischen 200 und 400° C erhitzt.

5. Verfahren gemäss Anspruch 4, dadurch gekennzeichnet, dass man Tetramercaptoverbindungen der Formel II im Vakuum auf Temperaturen zwischen 300 und 350° C erhitzt.

6. Poly(arylensulfide) gemäss Anspruch 1, die durch Behandeln mit Brom, Metall- oder Metalloidpentahalogeniden oder anderen starken Oxidationsmitteln in dotierter Form vorliegen.

7. Poly(arylensulfide) gemäss Anspruch 1, die durch Behandeln mit Brom, $SbF_5$, $SbCl_5$, $AsF_5$ oder $PF_5$ in dotierter Form vorliegen.

8. Verwendung der Poly(arylensulfide) gemäss Anspruch 1 in dotierter Form als elektrisch leitende Polymere.

Europäisches Patentamt

# EUROPÄISCHER RECHERCHENBERICHT

Nummer der Anmeldung

EP 88 81 0387

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | GB-A-2 130 594 (CHEVRON RESEARCH CO.)<br>* Seite 5, Zeilen 45-50; Ansprüche *<br>--- | 1,6-8 | C 08 G 75/02<br>H 01 B 1/12 |
| D,A | JOURNAL OF POLYMER SCIENCE/PART A: POLYMER CHEMISTRY, Band 24, Nr. 12, Seiten 3153-3169, Dezember 1986, New York, NY, USA; V.A.SERGEYEV et al.: "Synthesis of Poly(arylene sulfide)s by reaction of armomatic sulfides with AICI3"<br>* Seite 3158, Formeln *<br>--- | 1 | |
| A | US-A-4 375 427 (G.G. MILLER et al.)<br>* Ansprüche 1-15 *<br>--- | 1,6-8 | |
| A | EP-A-0 031 444 (ALLIED CHEMICAL CORP.)<br>* Ansprüche 1,5-8 *<br>----- | 1,6-8 | |
| | | | **RECHERCHIERTE SACHGEBIETE (Int. Cl.4)** |
| | | | C 08 G 75/00<br>H 01 B 1/00 |

Der vorliegende Recherchenbericht wurde für alle Patentansprüche erstellt

| Recherchenort | Abschlußdatum der Recherche | Prüfer |
|---|---|---|
| BERLIN | 27-09-1988 | BOEKER R.B. |

**KATEGORIE DER GENANNTEN DOKUMENTE**

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P0403)